# EUROPEAN PATENT APPLICATION

(11) **EP 2 413 278 A1**
(43) Date of publication of application: **01.02.2012**
(21) Application number: 11175367.9
(22) Date of filing: 26.07.2011
(51) Int. Cl.: G06Q 20/00

(54) **Plug-in system and method for consumer credit acquisition**

(30) Priority: 26.07.2010 US 367551 P
(71) Applicant: Wonga Technology Limited, Dublin (IE)
(72) Inventor: Hurwitz, Jonty, London, NW1 7SN (GB); Damelin, Errol, London, NW1 7SN (GB)
(74) Representative: Coyle, Philip Aidan

(57) **Abstract**

An apparatus, system, and method to provide substantially in real time personalized and/or customized consumer credit from a Credit Provider into substantially any shopping basket or facility on the Internet or on a mobile network. In one embodiment, a consumer credit plug-in is provided to facilitate consumer credit provision to a consumer at a destination Website, including a credit service system including a memory having stored thereon consumer credit provision related instructions and consumer credit related data, and a processor to execute credit provision requests or instructions; wherein the consumer credit plug-in includes a file with instructions to execute commands to enable said remote credit service system to provide credit product provision to consumers, substantially in real time.

## Description

### CROSS REFERENCE TO RELATED APPLICATION

This application claims priority from US Provisional Patent Application No. 61/367,551, filed 26 July 2010, entitled **"PLUG-IN SYSTEM AND METHOD FOR CONSUMER CREDIT ACQUISITION ONLINE"**, which is incorporated in its entirety herein by reference.

### BACKGROUND

### 1. Technical Field

The present invention relates to methods and devices useful in managing consumer credit. Specifically, embodiments of the present invention relate to online systems, methods and apparatuses that provide ways to acquire consumer credit.

### 2. Description of Related Art

Web users may typically visit destination sites, for example, a ticket purchasing site, to eventually purchase a product or service. Following the process of selecting the product one wants, such as a ticket, the user typically ends up in the site's shopping basket, being asked to enter their card details or pay by some other kind of web wallet.

It would be highly advantageous to have a system that would be able to provide real time personalized and customizable consumer credit from a Credit Provider into substantially any shopping basket or facility on the Internet or on a mobile network.

### BRIEF SUMMARY

There is provided, in accordance with an embodiment of the present invention, an apparatus, system, and method to provide substantially in real time personalized and/or customized consumer credit from a Credit Provider into substantially any shopping basket or purchasing facility on the Internet or on a mobile network.

According to some embodiments of the present invention, a consumer credit plug-in is provided to facilitate consumer credit provision in real time to a consumer at a destination Website, including a credit service system with a memory having stored thereon consumer credit provision related instructions and consumer credit related data, and a processor to execute credit provision requests or instructions; wherein the consumer credit plug-in includes a file with instructions to execute commands to enable the remote credit service system to provide credit product provision to consumers, substantially in real time.

Moreover, in accordance with an embodiment of the present invention, a method is provided for facilitating the provision of personalized online credit via a web browser plug-in, including detecting a shopping basket for a consumer, using a credit payment plug-in; enabling the consumer to configure a request to execute a payment of the shopping basket, the request being communicated by the plug-in to a consumer credit provider system, to make a consumer payment provision decision in substantially real time; and providing credit provision execution instructions by the consumer credit provider system; wherein the plug-in runs instructions to execute commands to enable the remote credit provider system to provide personalized credit provision to the consumer in substantially in real time.

Furthermore, in accordance with an embodiment of the present invention, a system is provided for online loan based purchasing, comprising: a credit service system including a memory having stored thereon consumer credit provision related instructions and consumer credit related data, and a processor to execute the credit provision instructions; and a consumer credit plug-in including a file with instructions to execute commands to enable the remote credit service system to provide credit product decisions to consumers substantially in real time; wherein the credit service system is adapted to enable the execution of substantially real time personalized credit provision to the consumers. In some embodiments the consumer payment provision decisions are based on a real time analysis of data from multiple data sources. In some embodiments the real time personalized credit provision is at least partially made up from a consumer loan.

According to some embodiments, a browser plug-in is provided for facilitating the provision of complimentary online credit, or loan based credit, for a purchase, including: a file with instructions to execute commands to enable a remote credit service system to provide credit provision to a consumer at an online site of purchase, substantially in real time; and an interface with a credit service system, the interface adapted to execute credit provision requests or instructions, and if credit provision is authorized, to facilitate execution of the credit provision for an online purchase.

In addition, in accordance with an embodiment of the present invention, a system is provided for providing personalized online credit into existing Internet based shopping baskets, comprising elements described in the text and drawings herein.

In further embodiments a system is provided for providing dynamic online credit into an Internet based shopping basket, comprising elements described in the text and drawings herein.

In still further embodiments a system is provided for purchasing from an Online shopping basket, whereby the purchase is enabled using a substantially single use credit mechanism provided by a Credit Provider.

In yet further embodiments a system is provided for automatically entering single use card details directly into an Online shopping basket, whereby the single use card provides real time credit offered to a user by a Credit Provider, where the credit is generated based on a real time client data credit score and is executed via a credit payment plug-in.

These, additional, and/or other aspects and/or advantages of the present invention are: set forth in the detailed description which follows; possibly inferable from the detailed description; and/or learnable by practice of the present invention.

### BRIEF DESCRIPTION OF THE DRAWINGS

The principles and operation of the system, apparatus, and method according to the present invention may be better understood with reference to the drawings, and the following description, it being understood that these drawings are given for illustrative purposes only and are not meant to be limiting, wherein:

Fig. 1 is a schematic system diagram depicting components of a consumer credit plug-in based system, according to some embodiments; and

Fig. 2 is a flow diagram indicating the process by which a browser plug-in is used in order to provide credit for online purchasing, according to some embodiments.

### DETAILED DESCRIPTION

The following description is presented to enable one of ordinary skill in the art to make and use the invention as provided in the context of a particular application and its requirements. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed. In other instances, well-known methods, procedures, and components have not been described in detail so as not to obscure the present invention.

The term " plug-in" as used herein may include various plugins, add-ons, snap-ins, extensions or other software components that add specific capabilities to a browser, whether the browser runs on a desktop computer, mobile computer, smart phone or other computing or communications device. The term "Credit Provider" may include credit facilitators, agents, banks, lenders etc. The term "Shopping Basket Vendor" may include Website operators, financial services, or other online payment facility providers, for online sellers of products and/or services.

The term "Shopping Basket" may denote a particular section of a commercial website that allows the user to make payment over the internet for products or services using credit cards, debit cards, prepay cards, or other payment means, such as mobile wallets, bank transfers etc. The shopping basket may include the forms, boxes, objects, databases, GUI or code that functions to enable payments to be entered, processed, handled, authorized, confirmed and/or executed.

The term "real time" may denote a system that responds to events or signals within a predictable time after their occurrence; specifically the response time must be within the maximum allowed. Real time may also denote a data-processing system in which a computer receives constantly changing data, and processes it sufficiently rapidly to be able to control the source of the data. Real time may also describe a level of computer responsiveness that a user senses as sufficiently immediate or that enables the computer to keep up with some external process. The term "real time" may further include hard real-time, immediate real-time, soft real-time or near real time, to describe substantially instantaneous responses, within the limits of data communications, network delays, bandwidth limitations etc.

The terms "personalized" and "customizable" as used herein may refer to credit provision packages, sources, personal information conditions etc. that may be determined at least partially by the user.

The terms "complimentary consumer credit acquisition" or" supplementary consumer credit acquisition" refer to credit acquisition of credit beyond conventional credit, such as credit card companies. For example, a user without existing or useable credit lines, or with partial but insufficient credit lines, may apply for acquisition of additional complimentary or supplementary funds, such as loans, from a credit provider system for a purchase online. Furthermore such additional consumer credit may be generated by a credit provider external to the consumer's typical credit lines, such as backs and credit cards, such that the consumer payment provision decisions to be made are based on a real time analysis of consumer loan data from multiple data sources.

Currently, all mainstream web browsers support plug-in architectures. In general, open application programming interfaces (APIs) provide standard interfaces allowing third parties to create plug-ins that interact with and add functionality to the host application. This allows these third party or independent providers to develop applications or functions that appear to operate as part of the browser functionality. These plug-ins are shipped either as part of the default browser installation or can be installed as an optional extra by the user. There is not necessarily a relationship between the Web Browser makers and the plug-in developer/provider, however the plug-in must typically be compatible with the browser technology.

Embodiments of the invention described herein enable usage of browser plug-ins to provide substantially in real time, personalized and/or customized consumer credit from a Credit Provider into substantially any shopping basket or facility on the Internet or on a mobile network. Optionally, the Credit Provider herein described may include a Credit Provider enabled to provide personalized credit for a purchase or expense, being generated substantially in real time based on a client or user credit profile or score, or other selected credit decision parameters or criteria. For example, an online credit provider may facilitate a substantially real time based decision based on a user credit profile or score, such that total or partial credit, complimentary to standard credit facilities, may be provided substantially in real time to enable completion of online purchases. In some embodiments the credit service system is adapted to enable the execution of substantially real time complimentary and/or supplementary credit provision to said consumers (e.g., to compliment or supplement traditional credit provision such as credit cards or PayPal).

In some embodiments, after having installed a Consumer Credit Plug-in in a user's browser, as is described herein below, the user is enabled to click a button or enter a function on his/her browser which will launch a window or object, optionally overlaying the site. In this window or object the user is enabled to enter selected data or details which will allow a payment facilitator or credit provider to make a decision whether to facilitate the payment (by providing credit and/or by facilitating the transaction) and how to facilitate the payment, substantially in real time. Such a credit or payment facilitator may be referred to hereinafter as a Consumer Credit Provider, or CC provider, but may also include providers of credit to businesses, organizations or other non-end-consumer users, for example Wonga.com, credit card companies, banks, or other online credit facilitators. In one embodiment, if the decision is made to facilitate the transaction, then the plug-in may provide a set of payment details which the user can enter into the shopping basket. In a further embodiment, the browser plug-in may enter the provided card details directly into the shopping basket fields. According to some embodiments relevant customer information may be be pre-populated or entered into the plug-in overlay, GUI or platform.

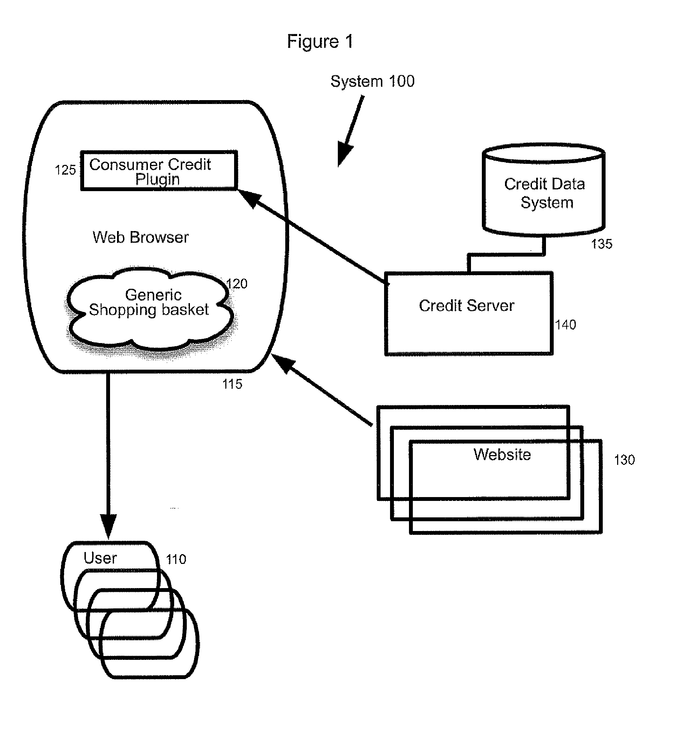

Reference is now made to **Fig. 1**, which is a schematic system diagram describing a system for the use of web browser plug-ins to provide real-time complimentary or supplementary credit into generic shopping baskets, for example, by way of generating one-time-use card numbers for a purchase. As can be seen in Fig. 1, system 100 includes one or more users 110, who may remotely visit any website on the internet or mobile network, and preferably any Website offering the purchase of products and/or services. Shopping sub-system 120 indicates a shopping basket on a Website, which is typically accessible through a Web browser 115, such as Firefox, Safari, Google Chrome, Internet Explorer or mobile or smart phone browsers. System 100 includes consumer credit plug-in 125, which may be typically installed within browser 115, to facilitate complimentary or supplementary consumer credit acquisition when making a purchase from one or more destination Websites 130. In some examples the plug-in is substantially universal, being usable in substantially any Website with a purchasing facility. In other examples the plug-in may be personalized for one or more Websites and work optimally in those selected Websites. For example, one Website operator may develop a customized version with one or more unique features, functions, discounts or pricing. Consumer credit plug-in may include a file with instructions to execute commands to enable a remote credit service system 135 to provide credit product decisions or offerings to consumers, optionally in real time or near real time. The browser plug-in may be configured to be supported by browsers including desktop browsers, PC browsers, smart phone browsers, mobile phone browsers and other suitable software applications for receiving, presenting and traversing information resources on the World Wide Web. The browser plug-in may include a purchase facility alert module, for identifying a user presence at a purchase site, and alerting the user as to the option of using the plug-in to process a purchase online using the plug-in.

Credit service system 135 is in communication with plug-in 125, via a credit service provision Server 140. Credit service system 135 may represent, for example, one or more CC Provider entities, which may make decisions (e.g. automated decisions in substantially real time) about credit provision, and provide notification to plug-in 125 as to the nature, form, structure, range, amount, conditions, composition and/or sources of the consumer credit being provided or offered by the CC Provider. By way of example, the consumer credit product provided or facilitated may be a short term loan, a fixed term loan, a revolving agreement, a running account, or any other relevant form of credit offering. Credit service system 135 may include a memory having stored thereon consumer credit provision related instructions, consumer credit related data, and a processor to execute the credit provision requests or instructions, resulting in the execution of substantially real time personalized credit provision to online users. Credit service provision server 140 may be adapted to serve credit provision data and/or commands to consumer credit plugin 125.

According to some embodiments, consumer credit plug-in 125 may generate a substantially single use or real time payment card, facility or structure to facilitate the provision of credit for the requested purchase, and the payment of the credit for the purchase directly into the shopping basket. Of course, multi-use cards or structures may also be used.

According to some embodiments, the provision of credit product offerings using credit plug-in 125 may be subject to different regulations in different regions, states or countries. Plug-in 125 may be used to facilitate credit product facilitation and/or provision in one or more jurisdictions, optionally in accordance with multiple regulatory systems, codes, rules or mechanisms.

According to some embodiments, the provision of credit product offerings using credit plug-in 125 may not be dependent on a defined or established relationship between the Credit Provider (i.e. providing credit via the consumer credit plug-in 125) and the operator of the Website (and shopping basket 120) into which the credit is being provided. For example, the plug-in 125 may be a publicly available download that any Website may decide to use, facilitate, or allow to be used in their shopping basket. In another example plug-in 125 may integrated into the shopping basket by the Website operator.

In some embodiments the Website operators may offer the option of installing the plug-in in order to facilitate the provision of credit on their site. In further embodiments the consumer credit provider and the website operator may have a financial arrangement and/or service arrangement to facilitate the facilitation or provision of credit to users of the Website. In still further embodiments one or more credit facilitating or providing services or entities may integrate plug-in 125 into their existing payment systems. For example, PayPal or other payment facilitators may integrate the consumer credit plug-in into their payment system such that any user of PayPal or another payment facilitation system may be able to utilize selected credit product offerings provided by the credit facilitator or provider.

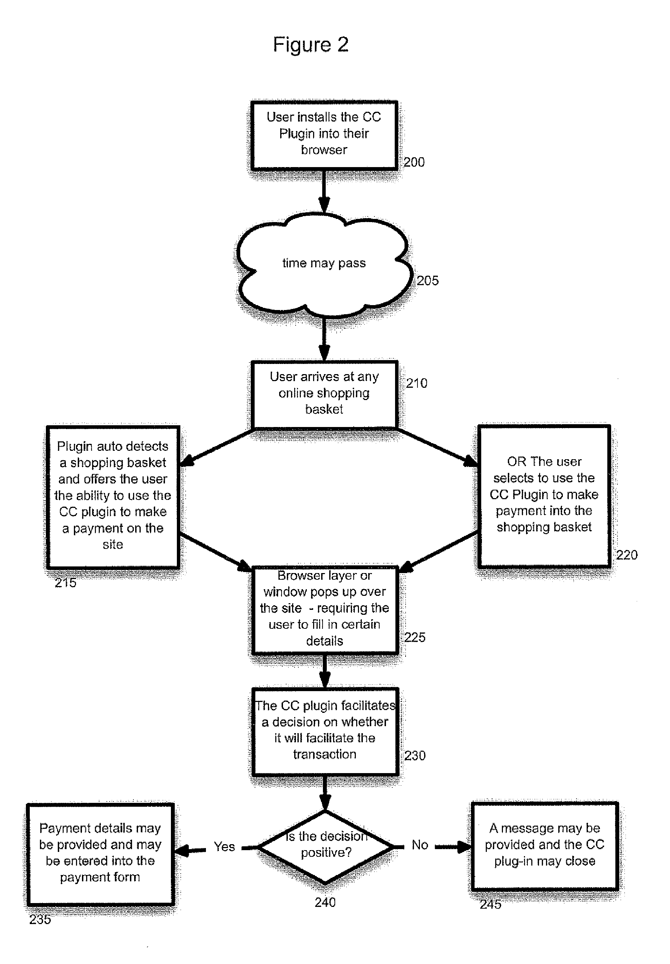

Reference is now made to **Fig. 2**, which is a flow diagram indicating the process by which a browser plug-in is used in order to provide credit by a Credit Provider for online purchasing, according to some embodiments. At stage 200 the consumer or user wanting to make an online purchase installs or runs the Consumer Credit (CC) Plug-in. This can happen in several ways including, for example, running a pre-packaged plug-in which may be executed automatically or manually at the time of the browser installation or thereafter; installing the CC plug-in from a different website or source (e.g. a download Website, plug-in Website, the Browser plug-in help site, CC Provider Website etc.); and/or installing the CC plug-in from the page of a shopping basket, buyer site or purchasing page. In the case where the plug-in was pre-installed or installed but not yet activated, there may be gap or interval at stage 205, between the installation and the actual usage or implementation of the plug-in. Of course, the plug-in may be installed and in use selectively by the user, and not necessarily with every online purchase. In some cases the plug-in may be automatically updated when necessarily, while in other cases it may be manually updated or reinstalled when necessary.

At stage 210 the user arrives at a shopping basket on substantially any website. At stage 215, the plug-in may automatically detect a shopping basket, and offer the user the possibility or option of using the plug-in to request complimentary or supplementary consumer credit, to execute a payment, and/or optionally to configure the request for execution of payment of the selected shopping basket. For example, such detection may be made using cookies, running shopping basket identification code, using embedded executable tags in shopping cart pages, or other suitable technology platforms or mechanisms. In the case of Websites wherein the Websites have been created to be "pay-later-friendly" (for example, with specific tags allowing a user to pay-later according to a special offers or special deals etc., or with a specific set of tags allowing the plug-in to automatically extract the exact value of the shopping basket directly into the plug-in), the plug-in may automatically offer credit to the customer, for example using a suitable communication form, plug-in icon flashing in the browser window or a popup or alternative object in the browser etc. In the case of Websites which are not "pay-later-friendly", the user may execute or activate the plug-in (220) of their own accord, for example, when the user is ready to make the purchase, enter the payment details, understand the credit facilities available for use etc. In the case where the CC Plug-in was not previously installed, the user may elect to download/install/run the plug-in at this stage, for example, via a link or object offering the option to install or run the plug-in. Whichever mechanism is used for activating the CC Plug-in, a popup or frame window, box or object maybe generated and presented to the user, either in the current window or tab, over the current window or tab, or as an independent window or tab, requiring the user to fill in certain details or fields relevant to this particular credit transaction. In some embodiments the details or fields may be automatically filled in or partially automatically filled in (e.g. using auto fill functions of the browser and/or similar functions of the Website). For example, fields may (but not necessarily) include: personal details, login data for existing customer of the CC plug-in, amount required to fulfill the shopping basket payment, terms or type of payment for the required purchase etc. Of course, other fields and details or combinations of fields and details may be used.

At stage 230 the CC Plug-in facilitates a decision making process for the credit supplier to determine whether to provide complimentary or supplementary credit for a purchase. For example, the CC Plug-in remotely communicates the consumer data, purchase data, predictive purchasing data, and/or consumer credit request with the CC provider system (see Fig.1, 135), to request of the CC Provider system to make a decision, substantially in real time or near real time, whether to facilitate the transaction, and/or how to facilitate the transaction. Consumer credit plug-in may include a file with instructions to execute commands to enable the remote credit provider system 135 to provide personalized credit product decisions or offerings to consumers, optionally in real time or near real time, and thereby to facilitate execution of personalized credit product offerings for the user at an online site of purchase. Credit service system 135 may include a memory having stored thereon consumer credit provision related instructions, consumer credit related data, and a processor to execute the personalized credit provision requests in substantially real time. In one example, the plug-in may be configured to extract purchase data, such as amount and optionally the nature of the purchase, and pass this data, along with user data and other relevant data, to the credit provider system. The credit supplier system may analyze the user data, user request, purchase data, user behavior, user history, user credit profile etc., and optionally may consider many other factors, substantially in real time, to make an automated decision as to whether to supply credit or partial credit to the consumer for the purchase at hand.

At stage 240, if the decision is made by the CC provider to allow credit provision for the consumer purchase, then at stage 235 the purchase configuration and/or details may be provided to the user, plug-in and/or Website for entry into the shopping basket payment form or facility, or the purchase details may be entered directly into the shopping basket payment form or facility by the plug-in. The purchase configuration and/or details may include money loans from one or more credit providers or loan or payment sources. Such a configuration may be configured substantially in real time by the credit service system based on user credit related data and/or other factors to be considered, calculated or processed substantially in real time. Depending on the shopping basket nature, these purchase details may include a card number, a promotion code, a web wallet number or any other suitable mode of payment, or combination of modes of payment. It is noted that multiple payment mechanisms or sources may be used to facilitate the purchase, including VISA, MasterCard, PayPal, mobile device payments, mobile wallet, payments, Amazon Payments, Google Checkout or any other suitable payment systems, means or technologies. According to one example, the plug-in may generate a 1 time-use debit card number for a virtual debit card to be used for a single transaction. This virtual debit card may be loaded with the exact amount needed to fulfill the requested shopping basket transaction. In another example, a one-time use PayPal account or other online payment account may be generated for each required purchase.

At stage 240, if the decision is made by the CC provider not to allow the provision of credit for the purchase, then at stage 245 the CC plug-in window may optionally deliver a message, alert, signal or instruction, and/or may close the plug-in or otherwise exit or disable the system. In some embodiments, at stage 245, the user may be instructed to refer to the CC provider for other credit provision options. Any combination of the above steps may be implemented. Further, other steps or series of steps may be used.

According to some embodiments, the CC plug-in may enable usage of a browser plug-in to provide dynamic personalized consumer credit from a Credit Provider into any shopping basket on the Internet, wherein the credit may be fully provided or partially provided. For example, a user which to purchase 10 books from Amazon.com for $150 may apply for dynamic personalized credit from a Credit Provider via the CC plug-in. The CC plug-in may enable a partial credit provision for the purchase, for example, only allowing the user to pay $100 from the Credit Provider, wherein the user may then adjust the shopping cart items to enable successful completion of the purchase within the dynamic credit provided. Optionally, the Credit Provider herein described may include a Credit Provider enabled to provide the dynamic personalized credit substantially in real time based on a client or user credit profile or score, or other selected credit decision parameters or criteria.

Although selected embodiments of the present invention have been shown and described individually, it is to be understood that at least aspects of the described embodiments may be combined.

The foregoing description of the embodiments of the invention has been presented for the purposes of illustration and description. It is not intended to be exhaustive or to limit the invention to the precise form disclosed. It should be appreciated by persons skilled in the art that many modifications, variations, substitutions, changes, and equivalents are possible in light of the above teaching. It is, therefore, to be understood that the appended claims are intended to cover all such modifications and changes as fall within the true spirit of the invention.

## Claims

1. A system for facilitating the provision of personalized online credit via a web browser plug-in, comprising:
a consumer credit plug-in to facilitate consumer credit provision to a consumer at a destination Website; and
a credit service system including a memory having stored thereon consumer credit provision related instructions and consumer credit related data, and a processor to execute credit provision requests or instructions substantially in real time,
wherein said consumer credit plug-in includes a file with instructions to execute commands to enable said remote credit service system to provide credit product provision to consumers, substantially in real time.

2. The system of claim 1, wherein said credit provision is customizable, such that said consumer selects how to configure said provision.

3. The system of claim 1, wherein said consumer credit plug-in is adapted to generate a substantially single use payment card to facilitate the provision of credit for a requested purchase.

4. The system of claim 1, wherein said consumer credit plug-in is adapted to facilitate credit product facilitation in one or more jurisdictions.

5. The system of claim 1, wherein said credit service system is adapted to make loan provision decisions for a user for a multitude of purchase sites.

6. The system of claim 5, wherein said loan provision decision is based on a real time analysis of consumer specific loan history data from multiple data sources.

7. The system of claim 1, wherein said web browser plug-in is a mobile phone compatible plug-in.

8. The system of claim 1, further comprising a consumer credit provision server to serve consumer credit data to said consumer credit plug-in.

9. An online loan based purchasing system, comprising:
a credit service system including a memory having stored thereon consumer credit provision related instructions and consumer credit related data, and a processor to execute consumer purchasing instructions based on a real time loan; and
a consumer credit plug-in including a file with instructions to execute commands to enable said remote credit service system to provide said loan to consumers substantially in real time,
wherein said credit service system is adapted to enable the execution of a substantially real time personalized loan provision to said consumers.

10. The system of claim 9, wherein said consumer credit plug-in is adapted to be run on a mobile communications device.

11. The system of claim 9, wherein said consumer credit plug-in is adapted to generate a substantially single use payment card to facilitate the provision of credit for a requested purchase.

12. A browser plug-in for for facilitating the provision of loan based online credit for a purchase, comprising:
a file with instructions to execute commands to enable a remote credit service system to provide credit provision to a consumer at an online site of purchase, substantially in real time; and
an interface with a credit service system, said interface adapted to execute credit provision requests or instructions, and if credit provision is authorized, to facilitate execution of said credit provision for an online purchase,
wherein said credit provision is an least partially based on a consumer loan.

13. The browser plug-in of claim 12 wherein said plug-in includes a purchase facility alert module, for identifying a user presence at a purchase site, and alerting said user as to the option of using the plug-in to process a purchase online using the plug-in.

14. The browser plug-in of claim 12, wherein said plug-in is configured to supported by browsers selected form the set including desktop browsers, PC browsers, smart phone browsers, and mobile phone browsers.
